Europäisches Patentamt

European Patent Office

Office européen des brevets

(19)

(11) Publication number: **0 300 975**
**A1**

(12)

# EUROPEAN PATENT APPLICATION

(21) Application number: **88830131.4**

(22) Date of filing: **29.03.88**

(51) Int. Cl.4: **F 15 B 7/08**

(30) Priority: **21.07.87 IT 6763587**

(43) Date of publication of application:
**25.01.89 Bulletin 89/04**

(84) Designated Contracting States:
**AT BE DE ES FR GB IT NL SE**

(71) Applicant: **AMSEA S.p.A.**
**Corso Susa 20**
**I-10040 Caselette (Torino) (IT)**

(72) Inventor: **De Marchi, Angiolo**
**Via S. Agnese 3**
**I-20123 Milano (IT)**

(74) Representative: **Buzzi, Franco et al**
**c/o Jacobacci-Casetta & Perani S.p.A. Via Alfieri, 17**
**I-10121 Torino (IT)**

(54) Hydraulic pressure transducer, particularly for transmission devices for motor vehicles and like applications.

(57) A hydraulic pressure transducer is constituted by a remote-controlled sealed hydraulic unit (1), particularly for transmission devices for motor vehicles and like applications, and comprises two cylinder-piston units (2, 3) operatively associated with a drive member and with a driven member and defining respective pressure chambers (7, 26) filled with hydraulic fluid and interconnected by a tube (4). At least one of the two cylinder-piston units (2) is provided with a sealed reservoir (17) for accummulation of the hydraulic fluid of the unit (1) under pressure.

FIG. 1

EP 0 300 975 A1

## Description

### Hydraulic pressure transducer, particularly for transmission devices for motor vehicles and like applications.

The present invention relates to hydraulic pressure transducers constituted by a remote-controlled sealed hydraulic unit of the type comprising two cylinder-piston units with rolling diaphragms operatively associated with a drive member and with a driven member and defining respective pressure chambers filled with hydraulic fluid and interconnected by a tube.

Hydraulic control units of the above specified type are used particularly in remote transmission devices in motor vehicles (motor cars, motor boats), for example, for controlling the friction clutch, the gearbox, the opening of movable parts of the bodywork (bonnet of the engine compartment and boot lid) etc., and in other industrial applications in the field of automation.

The object of the present invention is to provide a remote-controlled sealed hydraulic unit of the type specified above, formed so as to ensure greater functional efficiency in use, together with a longer working life.

According to the invention this object is achieved by virtue of the fact that at least one of the cylinder-piston units of the unit has a sealed reservoir for accumulating the hydraulic fluid of the unit under pressure.

This sealed reservoir is conveniently constituted by a cylinder which communicates, in the rest condition of the unit, with the pressure chamber of the cylinder-piston unit and a wall of which is constituted by a sprung piston with a rolling diaphragm.

By virtue of this characteristic, the hydraulic fluid of the unit is kept under slight pressure in the rest condition, which on the one hand enables the rolling diaphragms of the two cylinder-piston units to be kept in the correct configuration, and on the other hand enables any play in the transmission due, for example, to wear of elements of the driven member of the unit to be absorbed and recovered automatically.

The sealed reservoir may possibly have a valve for the refilling of the unit with hydraulic fluid.

According to another aspect of the invention, each of the rolling diaphragms has an annular peripheral edge for stationary fixing to the unit, with a particular profile in cross-section (triangular, circular or the like).

This configuration ensures better hermetic sealing in both static conditions and dynamic conditions of the unit, thus ensuring perfect sealing.

The invention will now be described in detail with reference to the appended drawings, provided purely by way of non-limiting example, in which:

Figure 1 shows a remote-controlled sealed hydraulic unit according to the invention schematically and in partial longitudinal section, and

Figure 2 shows a variant of Figure 1.

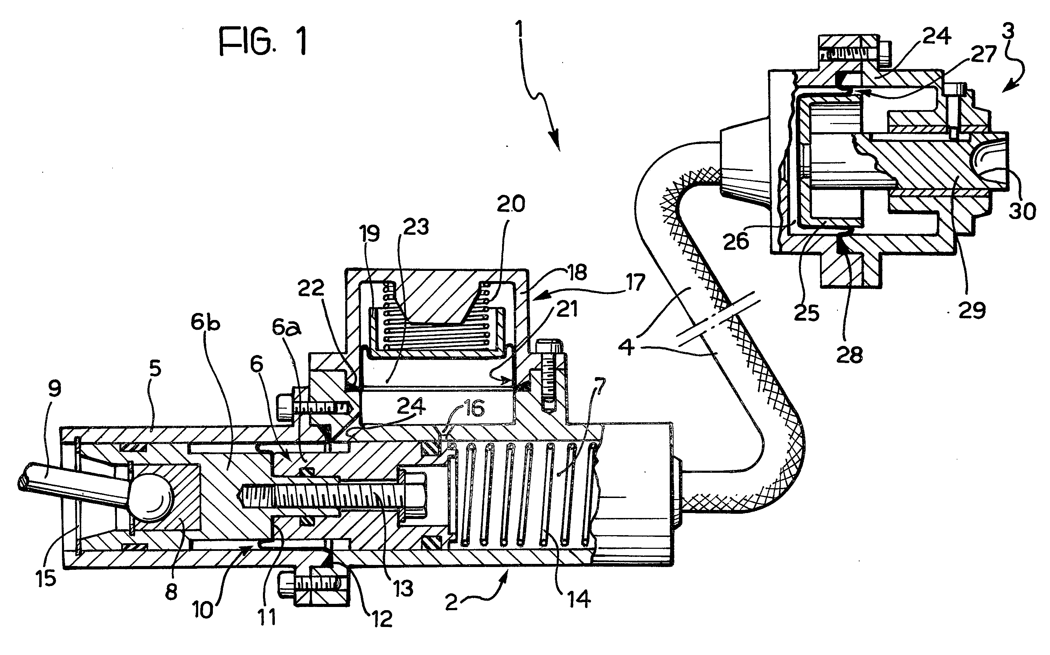

With reference initially to Figure 1, a remote-controlled sealed hydraulic unit usable in a transmission device for motor vehicles is generally indicated 1 and comprises essentially a hydraulic emitter 2 and a hydraulic receiver 3 interconnected by a flexible tube 4 and constituting a sealed pre-assembled system ready for installation.

The hydraulic emitter 2 is constituted by a cylinder 5 within which is axially slidable a piston 6 defining at one end a pressure chamber 7 and carrying at its opposite end an insert 8 in which a drive member 9 operable from outside the unit 1 is engaged.

The pressure chamber 7 is in communication with the flexible tube 4 and is closed at its opposite end by an annular rolling diaphragm 10 whose inner circumferential edge is clamped at 11 relative to the piston 6 and whose outer circumferential edge 12 is clamped relative to the cylinder 5. According to one aspect of the invention, this circumferential edge 12 has a triangular profile in cross-section, which ensures effective fluid-tight sealing of the pressure chamber 7 in both static conditions and dynamic conditions.

In the embodiment illustrated, the piston 6 is constituted by two parts 6a, 6b of aluminium or other material connected together axially by a screw 13 by means of which the circumferential inner edge of the rolling diaphragm 10 is also gripped. It should be noted, however, that the piston 6 could be made in a single piece from moulded plastics material, with the inner circumferential edge of the rolling diaphragm 10 fixed to it by co-moulding.

A helical compression spring 14 is inserted between the piston 6 and the end of the cylinder 5 connected to the flexible tube 4 and, in the inoperative rest condition of the unit 1 illustrated in the drawing, urges the piston 6 against a stop 15 carried by the opposite end of the cylinder 5. In this condition the thrust chamber 7 communicates through a passage 16 with a sealed reservoir 17 fixed to the cylinder 5. This reservoir 17 has the general form of a hydraulic accumulator with a cylinder 18 in which is inserted a piston 19 subject to the action of a thrust spring 20 and connected to the cylinder 18 by means of a rolling diaphragm 21. The rolling diaphragm 21 also has a circumferential edge 22 for stationary anchoring to the cylinder 18, with a triangular profile in cross-section.

The piston 19 defines in the cylinder 18 a thrust chamber 23 which is in permanent communication with the zone of the thrust chamber 7 adjacent the rolling diaphragm 10 through a passage 24.

According to a variant not illustrated, the reservoir 17 may be provided with a refill valve, not illustrated, of conventional type.

The hydraulic receiver 3 is also constituted by a cylinder 24 in which a piston 25 is movable and defines in the cylinder 24 a pressure chamber 26 communicating with the pressure chamber 7 of the hydraulic emitter 2 through the flexible tube 4. The piston 25 is also provided with a rolling diaphragm 27 with a peripheral edge 28 which is anchored in a stationary condition to the cylinder 24 and has a triangular cross-sectional profile.

The piston 25 is fixed at its end opposite the thrust chamber 26 to an axial shaft 29 prearranged at 30 for engagement of a driven member.

The thrust chambers 7 and 26, the tube 4 and the reservoir 17 are filled with hydraulic fluid.

In operation, the spring 14 tends to hold the unit 1 in the rest condition illustrated in the drawing. As soon as the piston 6 of the hydraulic emitter 2 is moved axially against the action of the spring 14 by means of the drive member 9, the hydraulic fluid in the unit causes a corresponding axial movement of the piston 25 of the hydraulic receiver 3 and hence of the driven member associated with the shaft 29. When the thrust imparted to the drive member 9 ceases, the unit returns to the initial rest condition. In this condition, the hydraulic fluid is maintained under slight pressure as a result of the thrust exerted by the spring 20 on the piston 19 of the reservoir 17. This pressure enables the rolling diaphragms 10 and 27 advantageously to be kept under tension.

The presence of the reservoir 17 also enables any play in the transmission, due to wear of the components of the mechanism controlled by the unit 1, to be recovered automatically.

By definition, these advantageous effects, together with the perfect hermetic sealing of the unit resulting from the configuration of the stationary anchoring edges of the rolling diaphragms 10, 21 and 27, leads to an appreciable improvement in the performance and efficiency of the unit itself, as well as to an increase in its working life.

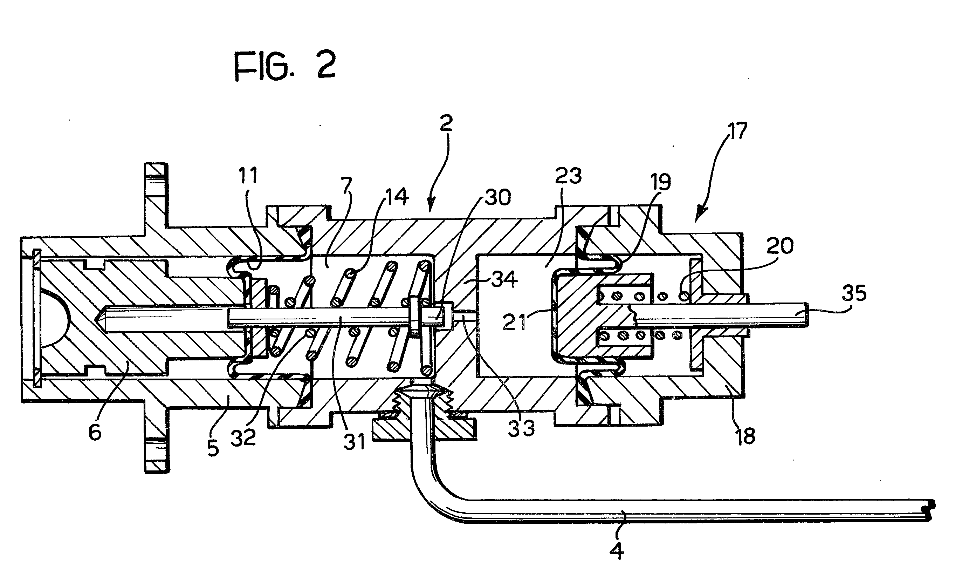

The variant illustrated in Figure 2 is generally similar to the embodiment described above with reference to Figure 1 and only the differences will be described in detail, the same reference numerals being used for identical or similar parts. In this variant, the reservoir 17 is fixed to the cylinder 5 on an axial extension thereof instead of radially, and the communication between the pressure chamber 7 and the thrust chamber 23 is controlled by an obturator 30 carried by a shaft 31 slidable relative to the piston 6 against the action of a spring 32 coaxial with the spring 14. The obturator 30 also provides a guide for the piston 6. In the embodiment illustrated, the obturator 30 is cylindrical and cooperates with a passage 33 formed in an intermediate partition 34 of the cylinder 5 which separates the pressure chamber 7 and the thrust chamber 23. Alternatively, the obturator 30 could have a conical shape or be replaced by a blade valve inserted in the passage 33. Moreover, in this variant, the piston 19 of the accumulator 17 carries a level indicator rod 35 which projects in a sealed manner from the cylinder 18.

In operation, the thrust function is accomplished by the rolling diaphragm 10, with evident advantages in connection with the total efficiency of the system.

Naturally, the details of construction and forms of embodiment may be varied widely with respect to those described and illustrated, without thereby departing from the scope of the present invention.

Thus, for example, the sealed reservoir 17 could be separate from the unit and connected to the emitter 2 or to the receiver 3 by means of a tube. The spring 20 of the reservoir 17 could then be replaced by a different thrust device with a similar function. Moreover, the receiver 3 could have a spring biassing the piston 25, like the emitter 2, and the three rolling diaphragms 10, 21 and 27 could be provided with sectional profiles other than triangular (for example circular or the like) and could also be provided with respective head ORs.

**Claims**

1. A hydraulic pressure transducer constituted by a remote-controlled sealed hydraulic unit, particularly for transmission devices for motor vehicles, including two cylinder-piston units with rolling diaphragms operatively associated with a drive member and with a driven member and defining respective pressure chambers filled with hydraulic fluid and interconnected by a tube, characterised in that at least one of the cylinder-piston units (2) is provided with a sealed reservoir (17) for the accummulation of the hydraulic fluid of the unit (1) under pressure.

2. A transducer according to Claim 1, characterised in that the sealed reservoir (17) is formed by a cylinder (18) which communicates, in the rest condition of the unit (1), with the pressure chamber (7) of the cylinder-piston unit (2), and a wall of which is constituted by a sprung piston (19, 20) with a rolling diaphragm (21).

3. A transducer according to Claim 2, characterised in that the rolling diaphragms (10, 21, 27) have respective annular peripheral edges (12, 22, 28) for stationary fixing to the unit (1), having triangular profiles in cross-section.

4. A transducer according to any one of the preceding claims, characterised in that the reservoir (17) is possibly provided with a refill valve.

5. A transducer according to Claim 1 or Claim 2, characterised in that the sealed reservoir (17) is located radially relative to the cylinder (5) of the cylinder-piston unit (2).

6. A transducer according to Claim 1 or Claim 2, characterised in that the sealed reservoir (17) is disposed axially relative to the cylinder (5) of the cylinder-piston unit (2).

7. A transducer according to claim 6, characterised in that it comprises an obturator (30) coaxial with the piston (6) for controlling communication between the sealed reservoir (17) and the pressure chamber (7) of said cylinder-piston unit (2).

FIG. 1

0300975

0300975

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 307 997 (AUTOMOTIVE PRODUCTS LTD) <br> * Page 10, line 20 - page 11, line 36 * | 1-5 | F 15 B 7/08 |
| Y | | 6,7 | |
| Y | DE-A-3 002 850 (AUDI NSU AUTO UNION AG) <br> * Page 8, lines 1-11 * | 6,7 | |
| A | US-A-4 372 118 (ANDERSEN) <br> * Whole document * | 1-3 | |

TECHNICAL FIELDS
SEARCHED (Int. Cl.4)

F 15 B

The present search report has been drawn up for all claims

| Place of search | Date of completion of the search | Examiner |
|---|---|---|
| THE HAGUE | 06-10-1988 | KNOPS J. |

EPO FORM 1503 03.82 (P0401)